# EUROPÄISCHE PATENTSCHRIFT

(11) **EP 1 578 820 B1**
(45) Veröffentlichungstag und Bekanntmachung des Hinweises auf die Patenterteilung: **15.08.2007**
(21) Anmeldenummer: 03789287.4
(22) Anmeldetag: 16.12.2003
(51) Int. Cl.: C08F 220/18, C09J 4/00, C09J 133/06, C09J 131/02, C08J 5/12

(54) **KASCHIERKLEBSTOFF**
LAMINATING ADHESIVE
ADHESIF A CONTRECOLLER

(30) Priorität: 20.12.2002 DE 10261196
(43) Veröffentlichungstag der Anmeldung: 28.09.2005
(73) Patentinhaber: BASF Aktiengesellschaft, 67056 Ludwigshafen (DE)
(72) Erfinder: JUNG, Martin, 68165 Mannheim (DE); PAULUS, Wolfgang, 55270 Ober-Olm (DE); FRICKE, Hans-Joachim, 67246 Dirmstein (DE); CENTNER, Alexander, 67127 Rödersheim-Gronau (DE)
(86) Internationale Anmeldenummer: PCT/EP2003/014273
(87) Internationale Veröffentlichungsnummer: WO 2004/058834

(56) Entgegenhaltungen:
- EP-A- 0 323 560
- EP-A- 0 950 698
- WO-A-03/011993
- DE-A- 19 935 624
- US-A1- 2002 032 251

## Beschreibung

Die Erfindung betrifft einen Kaschierklebstoff, enthaltend als Bindemittel ein Gemisch aus
A) einem Polymer, welches erhältlich ist durch Polymerisation von radikalisch polymerisierbaren Verbindungen, und
B) Verbindungen mit ethylenisch ungesättigten, radikalisch polymerisierbare Gruppen (kurz polymerisierbare Gruppe) und einem gewichtsmittleren Molekulargewicht Mw kleiner 5000 g/mol.
Insbesondere betrifft die Erfindung die Verwendung des Kaschierklebstoffs in der Verbundfolien- und Glanzfolienkaschierung.

Als Kaschierklebstoff werden u.a. lösemittelfreie Polyurethansysteme verwendet.

Bekannt ist aus DE 19935624 auch die Verwendung von UV-vernetzbaren, wässrigen Polymerdispersionen.

Bei wässrigen Polymerdispersionen ist eine Trocknung zur Entfernung des Wassers erforderlich.

Gewünscht sind daher lösemittelfreie Kaschierklebstoffe, welche eine Alternative zu den Polyurethansystemen sein können.

Anforderungen an einen alternativen Kaschierklebstoff sind insbesondere:
- hohe Festigkeiten des hergestellten Verbundes
- gute Verarbeitbarkeit
- geringe Einsatzmengen, geringes Auftragsgewicht
- schnelle Weiterverarbeitbarkeit des hergestellten Verbundes
- Lagerstabilität des Kaschierklebstoffs.
- bei Glanzfolienkaschierungen kein Ablösen der Folie im Bereich von Nutungen und Prägungen

Aufgabe der vorliegenden Erfindung waren Kaschierklebstoffe, welche die vorstehenden Anforderungen in möglichst hohem Maße erfüllen.

Demgemäß wurden die eingangs definierten Kaschierklebstoffe und ihre Verwendung in der Verbund- und Glanzfolienkaschierung gefunden.

Der erfindungsgemäße Kaschierklebstoff enthält als wesentliche Bestandteile Polymere A) und Verbindungen B).

### Zu den Polymeren A):

Das Polymer A) ist vorzugsweise aufgebaut aus radikalisch polymerisierbaren Verbindungen (Monomere).

Vorzugsweise besteht das Polymer zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren, Ethylen oder Propylen genannt.

Als Hauptmonomere bevorzugt sind die C₁- bis C₁₀-Alkylacrylate und -methacrylate, insbesondere C₁- bis C₈-Alkylacrylate und -methacrylate, wobei die Acrylate jeweils besonders bevorzugt sind.

Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere.

Neben den Hauptmonomeren kann das Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fummarsäure.

Weitere Monomere sind z. B. auch Hydroxylgruppen enthaltende Monomere, insbesondere C₁-C₁₀-Hydroxyalkyl(meth)acrylate, (Meth)acrylamid und Ureidogruppen enthaltende Monomere wie Ureido(meth)acrylate.

Als weitere Monomere seien darüberhinaus Phenyloxyethylglykolmono- (meth-)acrylat, Glydidylacrylat, Glycidylmethacrylat, Amino- (meth-)acrylate wie 2-Aminoethyl- (meth-)acrylat genannt.

Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern. In Betracht kommen insbesondere auch cyclische Lactame wie N-Vinylpyrrolidon oder N-Vinylcaprolactam.

Das Polymer ist bevorzugt zu mindestens 40 Gew.-%, besonders bevorzugt zu mindestens 60 Gew.-% und ganz besonders bevorzugt zu mindestens 80 Gew.-% aus C₁-C₂₀-Alkyl(meth)acrylaten, insbesondere den oben genannten Alkyl(meth)acrylaten aufgebaut.

Vorzugsweise handelt es sich um ein durch Bestrahlung mit energiereichem Licht z.B. UV-Licht oder Elektronenstrahlen vernetzbares Polymer.

Entsprechend vernetzbar ist das Polymer z.B. wenn Wasserstoffprotonen von der Polymerhauptkette photochemisch, insbesondere auch unter Verwendung eines Photoinitiators oder durch Elektronenstrahlen abgetrennt werden können, so dass ein Radikal entsteht, welches weitere chemische Reaktionen eingehen kann.

Vorzugsweise enthält der Kaschierklebstoff einen Photoinitiator.

Beim Photoinitiator kann es sich z.B. um sogenannte α-Spalter handeln, das sind Photoinitiatoren, bei denen eine chemische Bindung gespalten wird, so dass 2 Radikale entstehen, die die weiteren Vernetzungs- oder Polymerisationsreaktionen initiieren.

Genannt seien z.B. Acylphosphinoxide (Lucirin® Marken der BASF), Hydroxyalkylphenone (z.B. Irgacure® 184), Benzoinderivate, Benzilderivate, Dialkyloxyacetophenone.

Insbesondere kann es sich um sogenannte H-Abstraktoren handeln, welche ein Wasserstoffatom von der Polymerkette ablösen, z.B. handelt es sich hierbei um Photoinitiatoren mit einer Carbonylgruppe. Diese Carbonylgruppe schiebt sich in eine C-H Bindung unter Ausbildung einer C-C-O-H Gruppierung.

Genannt seien hier insbesondere Acetophenon, Benzophenon und deren Derivate.

Es können beide Klassen von Photoinitiatoren allein oder auch im Gemisch verwendet werden.

In einer besonderen Ausführungsform ist der Photoinitiator oder zumindest einer der Photoinitiatoren, falls ein Gemisch verwendet wird, an das Polymer A) gebunden.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder (Meth)acrylgruppe.

Geeignete copolymerisierbare Fotoinitiatoren sind Acetophenon- oder Benzophenonderivate, welche mindestens eine, vorzugsweise eine, ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon-oder Benzophenonderivats gebunden sein. Im allgemeinen befindet sich zwischen Phenylring und ethylenisch ungesättigter Gruppe eine Spacergruppe (Abstandshalter).

Die Spacergruppe kann z.B. bis 100 C-Atome enthalten.

Geeignete Acetophenon- oder Benzophenonderivate sind z.B. in EP-A-346 734, EP-A-377199 (1. Anspruch), DE-A-4 037 079 (1. Anspruch) und DE-A- 3 844 444 (1. Anspruch) beschrieben und sind durch diesen Verweis auch in der vorliegenden Anmeldung offenbart. Bevorzugte Acetophenon- und Benzophenonderivate sind solche der Formel 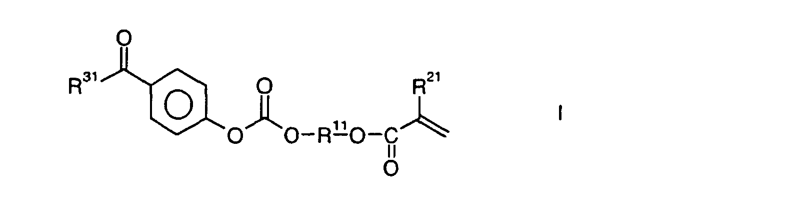 worin R¹¹ für einen organischen Rest mit bis zu 30 C-Atomen, R21 für ein H-Atom oder eine Methylgruppe und R³ für eine gegebenenfalls substituierte Phenylgruppe oder eine C₁-C₄-Alkylgruppe steht.

R¹¹ steht besonders bevorzugt für eine Alkylengruppe, insbesondere für eine C₂-C₈-Alkylengruppe.

R³¹ steht besonders bevorzugt für eine Methylgruppe oder eine Phenylgruppe.

Der erfindungsgemäße Kaschierklebstoff enthält vorzugsweise 0,0001 bis 1 mol, besonders bevorzugt 0,0002 bis 0,1, ganz besonders bevorzugt 0,003 bis 0,01 mol des Fotoinitiators, bzw. der als Fotoinitiator wirksamen, an das Polymergebundenen Molekülgruppe, pro 100 g der Gewichtssumme von A) + B).

Das Polymer A) hat vorzugsweise einen K-Wert von 10 bis 90, insbesondere von 30 bis 80, besonders bevorzugt von 40 bis 60, gemessen in Tetrahydrofuran (1 %ige Lösung, 21 °C).

Der K-Wert nach Fikentscher ist ein Maß für das Molekulargewicht und Viskosität des Polymerisats.

Das mit dem obigen K-Wert-Bereich verbundene Molgewicht ist weitaus höher als das Molgewicht der Verbindungen B). Das gewichtsmittlere Molgewicht des Polymeren A) ist im allgemeinen mindestens doppelt, insbesondere mindestens 10 mal so hoch wie das der Verbindungen B).

Die Glasübergangstemperatur (Tg) des Polymeren beträgt vorzugsweise -60 bis +10°C, besonders bevorzugt -55 bis 0°C, ganz besonders bevorzugt -55 bis -10°C.

Die Glasübergangstemperatur des Polymeren läßt sich nach üblichen Methoden wie Differentialthermoanalyse oder Differential Scanning Calorimetrie (s. z.B. ASTM 3418/82, sog. "midpoint temperature" bestimmen.

Polymere A) können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die Polymeren durch Polymerisation der Monomeren in Lösungsmitteln (Lösungspolymerisation), insbesondere in Lösungsmitteln eines Siedebereichs von 50 bis 1500°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n- und iso-Propanol, n- und iso-Butanol, vorzugsweise isopropanol und/oder isobutanol sowie Kohlenwasserstoffe wie Toluol und insbesondere Benzine eines Siedebereichs von 60 bis 120°C in Frage. Ferner können Ketone, wie Aceton, Methylethylketon, Methylisobutylketon und Ester, bei Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen, Ketonperoxide und Alkylperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die Polymeren können dann in lösungsmittelfreiem Zustand, d.h. als Schmelzen, eingesetzt werden. In manchen Fällen ist es auch von Vorteil, die Polymeren durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

### Zu den Verbindungen B)

Als Verbindungen B) kommen übliche radikalisch polymerisierbare Monomere mit definierter chemischer Strukturformel und einem tatsächlichen Molgewicht unter 200 g/mol in Betracht (im Nachfolgenden als Verbindungen B1 bezeichnet).

Verbindungen B1 haben eine polymerisierbare Gruppe.

Als Verbindungen B1 sind insbesondere die oben aufgeführten Monomere zu nennen, aus denen das Polymer A) aufgebaut sein kann. Insbesondere zu nennen sind Acrylmonomere mit einer Acryl- oder Methacrylgruppe.

Sonstige Verbindungen B, die nicht unter B1 fallen werden im Nachfolgenden B2 genannt.

Insbesondere handelt es sich bei Verbindungen B2 um (Meth)acrylatverbindungen, bevorzugt sind jeweils die Acrylatverbindungen, d.h. die Derivate der Acrylsäure.

Bevorzugte (Meth)acrylat-Verbindungen B2 enthalten 2 bis 20, bevorzugt 2 bis 10 und ganz besonders bevorzugt 2 bis 5 copolymerisierbare, ethylenisch ungesättigte Doppelbindungen.

Das gewichtsmittlere Molekulargewicht M_{w} der Verbindungen B2 liegt bevorzugt unter 5000, besonders bevorzugt unter 3000 g/mol (bestimmt durch Gelpermeationschromatographie mit Polystyrol als Standard und Tetrahydrofuran als Elutionsmittel). Ganz besonders bevorzugt liegt es unter 2000 und insbesondere unter 1000 g/mol. Das M_{w} von B2 ist besonders bevorzugt größer 250 und ganz besonders bevorzugt größer 400 g/mol.

Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.

Als (Meth)acrylatverbindungen seien weiterhin Polyester(meth)acrylate genannt, wobei es sich um die (Meth)Acrylsäureester von Polyesterolen handelt.

Als Polyesterole kommen z.B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride oder Dialkylester der genannten Säuren eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols in Betracht.

Polyester(meth)acrylate können in mehreren Stufen oder auch einstufig, wie z.B. in EP 279 303 beschrieben, aus Acrylsäure, Polycarbonsäure, Polyol hergestellt werden.

Weiterhin kann es sich bei Verbindungen B) z.B. um Epoxid- oder Urethan(meth)acrylate handeln.

Epoxid(meth)acrylate sind z.B. solche wie sie durch Umsetzung von epoxidierten Olefinen oder Poly- bzw. Mono- oder Diglycidylethern, wie Bisphenol-A-diglycidylether, mit (Meth)acrylsäure erhältlich sind.

Die Umsetzung ist dem Fachmann bekannt und z.B. in R. Holmann, U.V. and E.B. Curing Formulation for Printing Inks and Paints, London 1984, beschrieben.

Bei Urethan(meth)acrylaten handelt es sich insbesondere um Umsetzungsprodukte von Hydroxyalkyl(meth)acrylaten mit Poly- bzw. Diisocyanaten (s. ebenfalls R. Holmann, U.V. and E.B. Curing Formulation for Printing Inks and Paints, London 1984).

Als Verbindungen B sind insbesondere Verbindungen B2 und Mischungen von B2 und B1 geeignet.

Vorzugsweise bestehen Verbindungen B) insgesamt zu mindestens 50 Gew.-% besonders bevorzugt zu mindestens 75 Gew.-% aus Verbindungen B2). Bevorzugte Verbindungen B2 sind die oben aufgeführten (Meth)acrylsäureester.

Insgesamt gilt für Verbindungen B), unabhängig davon ob es sich um B1, B2 oder Mischungen von B1 und B2 handelt, dass sie bei 21 °C, 1 bar flüssig sind.

Die Viskosität der Verbindungen B, bzw. des Gemisches der Verbindungen B beträgt vorzugsweise 0,01 bis 50 mPas, besonders bevorzugt 0,04 bis 10 mPas bei 23°C, 1 bar, gemessen nach DIN EN ISO 3219; ganz besonders bevorzugt beträgt die Viskosität 0,04 bis 2 und insbesondere 0,04 bis 1 mPas.

Im Mittel haben Verbindungen B, bzw. das Gemisch der Verbindungen B 1 bis 5, vorzugsweise 1 bis 3, besonders bevorzugt 1,5 bis 2,5 polymerisierbare Gruppen pro Molekül.

### Zur Mischung von A) und B)

Der Kaschierklebstoff enthält als Bindemittel ein Gemisch von A) und B), wobei der Gewichtsanteil von A) vorzugsweise maximal 99 Gew.-%, besonders bevorzugt maximal 95 Gew.-% und vorzugsweise mindestens 30 Gew.-%, besonders bevorzugt mindestens 50 bzw. mindestens 60 Gew.-% beträgt.

Entsprechend beträgt der Gewichtsanteil von B) vorzugsweise maximal 70 Gew.-%, besonders bevorzugt maximal 50 Gew.-% bzw. maximal 40 Gew.-% und vorzugsweise mindestens 1 Gew.-%, besonders bevorzugt mindestens 5 Gew.%.

Geeigente Gewichtsbereiche von A) und B) sind insbesondere:
für A): 99 bis 30 Gew.-%, besonders bevorzugt 95 bis 50 Gew.-%, ganz besonders bevorzugt 95 bis 60 Gew.-% und insbesondere 95 bis 70 Gew.-%
für B): entsprechend 1 bis 70 Gew.-%, besonders bevorzugt 5 bis 50 Gew.-%, ganz besonders bevorzugt 5 bis 40 Gew.-% und insbesondere 5 bis 30 Gew.-%

Sämtliche Gewichtsangaben für A) und B) sind dabei auf die Gewichtssumme von A) und B) bezogen.

Die Mischung von A) und B) kann nach üblichen Verfahren hergestellt werden.

Vorzugsweise wird Polymer A) erhitzt, z.B. auf Temperaturen zwischen 50 und 130°C, und Verbindungen A) werden, gegebenenfalls zusammen mit weiteren Zusatzstoffen, eingerührt.

Zu den Kaschierklebstoffen

Die Kaschierklebstoffe können allein aus dem Gemisch von A) und B) bestehen.

Wasser oder sonstige Lösemittel, z.B. aus der Lösungspolymerisation von A) sind vorzugsweise allenfalls in geringen Mengen vorhanden.

Vorzugsweise enthält der Kaschierklebstoff weniger als 5 Gew.-Teile, insbesondere weniger als 2 bzw. 1 Gew.-Teil Wasser und/oder Lösemittel auf 100 Gew.-Teile der Gewichtssumme von A) und B). Besonders bevorzugt ist der Kaschierklebstoff im wesentlichen frei von Wasser und sonstigen Lösemitteln.

Vorzugsweise enthält der Kaschierklebstoff mindestens einen Photoinitiator (s.oben). Soweit es sich dabei nicht um einen an das Polymer gebundenen Photoinitiator handelt, kann der Photoinitiator dem Gemisch von A) und B) oder bereits den Komponenten A) oder B) zu jeder Zeit zugesetzt werden.

Weitere Zusatzstoffe sind z.B. Stabilisatoren, Biozide oder Netzmittel.

Das Gemisch aus A) und B), und gegebenenfalls weitere Zusatzstoffen wird als Kaschierklebstoff zum Verkleben von großflächigen Substraten, d. h. zur Herstellung von Laminaten, verwendet. Das Gemisch lässt sich aufgrund seiner im Vergleich zum Polymer A) geringeren Viskosität leichter verarbeiten.

Als zu verklebende Substrate eignen sich z. B. Polymerfolien, insbesondere aus Polyethylen, orientiertem Polypropylen, Polyamid, Polyester, z.B. Polyethylenterephthalat (PET), Celluloseacetat, Zellglas, mit Metall (z. B. Aluminium) beschichtete (bedampfte) Polymerfolie (kurz: metallisierte Folien) oder auch Papier, Karton oder Metallfolien, insbesondere aus Aluminium. Die genannten Folien können auch z. B. mit Druckfarben bedruckt sein.

Der Kaschierklebstoff wird auf zumindest ein großflächiges Substrat vorzugsweise mit einer Schichtdicke von 0,1 bis 20, besonders bevorzugt 2 bis 15 g/m² z. B. durch Rakeln, Streichen etc. aufgetragen.

Das beschichtete Substrat dann sofort oder zu einem beliebigen späteren Zeitpunkt mit einem zweiten Substrat kaschiert werden, wobei die Temperatur z. B. 20 bis 200, vorzugsweise 20 bis 70°C und der Druck z. B. 1 bis 30, vorzugsweise 3 bis 20 N/m² betragen kann.

Mindestens eines der beiden zu verklebenden Substrate sollte transparent für energiereiches Licht, insbesondere UV-Licht oder Elektronenstrahlung sein.

Bei der Verwendung eines Fotoinitiators sollte dieser Fotoinitiator natürlich in dem Wellenlängenbereich aktivierbar sein, in dem die Folie transparent ist. Bei PET-Folien (Transparenz > 320 nm) verwendet man daher Acylphosphinoxide.

Das Polymerisat bzw. die Dispersion wird bevorzugt als Klebstoff für die Glanzfolienkaschierung oder Verbundfolienkaschierung verwendet.

Bei der Glanzfolienkaschierung werden Papier oder Karton mit transparenten Polymerfolien verklebt. Die Papiere oder Kartone können bedruckt sein.

Bei der Verbundfolienkaschierung werden verschiedene Folien miteinander verklebt, um die Eigenschaften dieser Folien zu kombinieren. Bedeutung haben Verbundfolien z.B. für Verpackungen.

Direkt nach der Verklebung kann die Kaschierklebstoffschicht durch die transparente Folie mit energiereichem Licht, welches die Vernetzungsreaktionen auslöst, bestrahlt werden.

Vorzugsweise handelt es sich dabei um UV-Licht oder Elektonenstrahlen. Zur UV-Bestrahlung können handelsübliche Quecksilbermitteldrucklampen oder Laser verwendet werden, die im UV-Bereich emittieren.

Die Strahlungsenergie kann z.B. 200 mJ/cm² bis 1500 mJ/cm² bestrahlte Fläche betragen.

Unmittelbar nach der Bestrahlung kann eine Weiterverarbeitung, z.B. Nutung oder Prägung der kaschierten Substrate, z.B. der mit Folie kaschierten Kartone erfolgen. Die Klebstoffschicht ist durchvernetzt und nicht mehr klebrig. Bei noch klebrigen Klebstoffschichten besteht insbesondere das Problem, dass die Werkzeuge, z.B. Schneidwerkzeuge, bei der Weiterverarbeitung verschmutzen.

Eine Wartezeit ist nicht mehr erforderlich.

Mit dem erfindungsgemäßen Kaschierklebstoff werden Substratverbunde mit hoher Haftfestigkeit, auch im Bereich von Nuten oder Prägungen und hoher Transparenz und hohem Glanz erhalten.

Der Kaschierklebstoff ist lagerstabil. Eine Trocknung des Kaschierklebstoffs nach Auftragen auf ein großflächiges Substrat ist nicht notwendig.

### Beispiele

### Polymere A - Herstellung

Abkürzungen: n-Butylacrylat (BA)
Ethylacrylat (EA)
Acrylsäure (AS)
Copolymerisierbares Benzophenonderivat der Formel I (Fl)
Iso-Butanol (BuOH)

| | Einwaage | Einsatzstoff |
|---|---|---|
| Vorlage 1 | Gesamt: 179,1 g | |
| | 125,918 g | BuOH |
| | 50,464 g | von Zulauf 1 |
| | 2,718 g | von Zulauf 2 |
| Zulauf 1 | Gesamt: 1009,28 g | |
| | 895,0 g | n-Butylacrylat |
| | 70,0 g | Ethylacrylat |
| | 30,0 g | Acrylsäure |
| | 14,286 g | Fotoinitiator 35 %ig |
| Zulauf 2 | Gesamt: 27,18 g | |
| | 2,0 g | tert.-Butylperoctoat |
| | 25,184 g | BuOH |
| Zulauf 3 | Gesamt: 18,78 g | |
| 2 | 2,0 g | tert.-Butylperoctoat |
| | 16,789 g | von LM i-BuOH |
| BuOH Gesamt: 167,89 g | | |

### Fahrweise:

Polymerisation läuft unter leichtem Stickstoffstrom. Während der Zugabe der Zuläufe 1 und 2 beträgt die Innentemperatur 100°C.
Vorlage 10 min bei 100°C anpolymerisieren.
Die Zuläufe 1 und 2 gleichzeitig starten.

Zulaufzeiten: Zulauf 1: 1 in 3 h
Zulauf 2: 2 in 3 h 15 min
Zulauf 3: 4 in 5 min

Nach Zulauf 2 Ende den Zulauf 3 in 5 min zudosieren. Gleichzeitig mit Beginn des Zulauf 3 die Temperatur innerhalb von 15 min auf 115°C erhöhen und insgesamt 45 min auspolymerisieren.

Die Rührerdrehzahl beträgt bis zum Ende der Zuläufe 100 Upm und danach 75 Upm.

Nach der Polymerisation 1 h bei 135°C und Vakuum entgasen.

Die Zusammensetzung der Polymere ist in Tabelle 1 angegeben.

**Tabelle 1**

| Polymer | BA | EA | AS | Fl | K-Wert |
|---|---|---|---|---|---|
| | Gew.-% | Gew.% | Gew.-% | Gew.-% | |
| A1 | 89,5 | 7 | 3 | 0,5 | 45,1 |
| A2 | 90 | 7 | 3 | - | 43,8 |

### Herstellung der Kaschierklebstoffe

Als Verbindung B wurde ein alkoxyliertes Trimethylolpropantriacrylat mit einer Viskosität von 0,07- 0,13 mPas verwendet.

Soweit ein separater Photoinitiator verwendet wurde, wurde dieser bei 70°C in Verbindung B gelöst.

### Verwendete Fotoinitiatoren:

Irgacure 184: Phenyl-(1-hydroxy)cyclohexylketon
Benzophenon:
Polymer A wurde auf 100°C erhitzt und die auf 70°C erwärmte Verbindung B bzw. die vorstehende Lösung eingerührt.
Die Viskosität von Polymer A) beträgt 70.000 mPas, die Viskosität der Mischungen 13.000 mPas.
Glanzfolienkaschierung

Substrate: Chromoduplex 2-Karton, bedruckt
Chromolux 700-Karton, bedruckt
Polypropylenfolie, einseitig elektrisch vorbehandelt (PP) oder Polyesterterephthalatfolie (PET)

Der zu prüfende Kleber (Temperatur des Klebstoffs 95°C) wird mittels eines Balkenrakels direkt auf die PP-Folie oder PET-Folie beschichtet (Kleberauftragsmenge 5 - 6 g trocken/m²). Der bedruckte Karton wurde in der Rollenkaschierstation bei 70°C, aufgepreßt.

Danach wurde durch die transparente Folie mit UV-Licht bestrahlt. Die Bestrahlungsdosis betrug 62 mJ/cm².

Die erhaltenen Klebstoffschichten sind klebfrei.

Prägung - ist die mechnische Verformung der Oberfläche der kaschierten Substrate mittels einer Rasterwalze auf der Folienseite.

Die Kaschierung wurde nach der UV-Bestrahlung in einem Walzenstuhl mit Prägewalze auf der Folienseite geprägt. Die Prägungen werden nach vorgewählten Lagerzeiten auf Ablösung der Kaschierfolie vom Karton geprüft und beurteilt (sieh Noten bei Tabelle 4).

Nutung - ist die mechanische Verformung (Rillen) von Glanzfolienkaschierungen.

Die Kaschierung wurde nach der UV-Bestrahlung in einer Hebelpresse genutet. Die Nuten werden nach vorgewählten Lagerzeiten auf Ablösung der Kaschierfolie vom Karton geprüft und beurteilt (siehe Noten bei Tabelle 3).

Die Haftung wird durch abziehen der Folie vom Karton im Winkel von ca. 180 Grad geprüft und beurteilt (siehe Noten bei Tabelle 2).

**Tabelle 2**

| Beurteilung der Haftung | | | |
|---|---|---|---|
| | Auftragsgewicht 6 g/m2, PP-Folie 12 µm, Chromolux 700 | | |
| Klebstoff (Gewichtsteile) | sofort | nach 1 Tag | nach 1 Woche |
| 2 A1 1 B 5 % lrgacure 184 | 4 | 2-3 | 2 |
| 2 A1 1 B 5 % Benzophe-non | 1 | 1 | 1 |
| 2 A2 1 B 5 % Irgacure 184 | 4 | 2 | 2 |
| 2 A2 1 B 5 % Benzophenon | 1 | 1 | 1 |

| | | | |
|---|---|---|---|
| Benotung: 1 = Vollflächiger Papier- oder Faserausriß - 2 = Teilweiser papier- oder Faserausriß 3 = Gute Haftung mit Adhäsionsbruch Karton oder Folie 4 = Schwache Haftung 5 = keine Haftung auf Karton oder Folie | | | |

Die Gewichtsangabe des Fotoinitiators erfolgt in Gew.-%, bezogen auf die Summe A + B.

**Tabelle 3**

| Nutung | | | |
|---|---|---|---|
| | Auftragsgewicht 6 g/m2, PP-Folie 12 µm, Chromolux 700 | | |
| Klebstoff (Gewichtsteile) | sofort | nach 1 Tag | nach 1 Woche |
| 2 A1 1 B 5 % Irgacure 184 | 1 | 1 | 1 |
| 2A1 1 B 5 % Benzophenon | 1 | 1 | 1 |
| 2 A2 1 B 5 % Irgacure 184 | 1 | 1 | 1 |
| 2 A2 1 B 5 % Benzophenon | 1 | 1 | 1 |

| | | | |
|---|---|---|---|
| Benotung: 1 Nut ist vollständig in Ordnung 2 Nut ist an einzelnen Stellen leicht geöffnet 3 Nut ist an einzelnen Stellen deutlich geöffnet 4 Nut ist vollständig offen | | | |

**Tabelle 4**

| Prägung | | | |
|---|---|---|---|
| | Auftragsgewicht 6 g/m2, PP-Folie 12 µm, Chromolux 700 | | |
| Klebstoff (Gewichtsteile) | sofort | nach 1 Tag | nach 1 Woche |
| 2 A1 1 B 5 % lrgacure 184 | 1 | 1 | 1 |
| 2 A1 1 B 5 % Benzophenon | 1 | 1 | 1 |
| 2 A2 1 B 5 % Irgacure 184 | 1 | 1 | 1 |
| 2 A2 1 B 5 % Benzophenon | 1 | 1 | 1 |

| | | | |
|---|---|---|---|
| Benotung: 1 = Vertiefungen geöffnet: 0 bis < 10 % 2 = Vertiefungen geöffnet: > = 10 bis < = 40 % 3 = Vertiefungen geöffnet: > = 40 bis < = 60 % 4 = Vertiefungen geöffnet: > 60 bis < = 90 % 5 = Vertiefungen geöffnet: > 90 bis 100 % | | | |

## Patentansprüche

1. Verwendung eines Kaschierklebstoffs, enthaltend als Bindemittel ein Gemisch aus
A) einem Polymer, welches erhältlich ist durch Polymerisation von radikalisch polymerisierbaren Verbindungen, und
B) Verbindungen mit ethylenisch ungesättigten, radikalisch polymerisierbare Gruppen (kurz polymerisierbare Gruppe) und einem gewichtsmittleren Molekulargewicht Mw kleiner 5000 g/mol.
für die Glanzfolienkaschierung, d. h. zum Verkleben von transparenten Polymerfolien mit Papier oder Karton, oder die Verbundfolienkaschierung für Verpackungen d. h. zum Verkleben von Polymerfolien mit anderen Polymerfolien Metallfolien oder metallisierten Folien.

2. Verwendung gemäß Anspruch 1, **dadurch gekennzeichnet, dass** das Polymer zu mindestens 40 Gew % aus (Meth)acrylaten aufgebaut ist.

3. Verwendung gemäß Anspruch 1 oder 2, **dadurch gekennzeichnet, dass** das Polymer durch Bestrahlung mit energiereichem Licht vernetzbar ist.

4. Verwendung gemäß einem der Ansprüche 1 bis 3, **dadurch gekennzeichnet, dass** an das Polymer ein Fotoinitiator gebunden ist.

5. Verwendung gemäß einem der Ansprüche 1 bis 4, **dadurch gekennzeichnet, dass** das Polymer ein mittleres Molgewicht hat, welches mindestens doppelt so hoch ist wie das Molgewicht von B).

6. Verwendung gemäß einem der Ansprüche 1 bis 5, **dadurch gekennzeichnet, dass** das Polymer einen K-Wert von 10 bis 90 (Tetrahydrofuran, 1 gew%ige Lösung, 21°C) hat.

7. Verwendung gemäß einem der Ansprüche 1 bis 6, **dadurch gekennzeichnet, dass** es sich bei dem Polymer um ein Lösungspolymerisat handelt.

8. Verwendung gemäß einem der Ansprüche 1 bis 7, **dadurch gekennzeichnet, dass** die Verbindungen B) bei 21°C, 1 bar flüssig sind und eine Viskosität von 0,05 bis 50 Pas haben.

9. Verwendung gemäß einem der Ansprüche 1 bis 8, **dadurch gekennzeichnet, dass** die Verbindungen B) im Mittel 1 bis 5 polymerisierbare Gruppen pro Molekül enthalten.

10. Verwendung gemäß einem der Ansprüche 1 bis 9, **dadurch gekennzeichnet, dass** es sich bei den polymerisierbaren Gruppen der Verbindungen B um Acryl- oder Methacrylgruppen handelt.

11. Verwendung gemäß einem der Ansprüche 1 bis 10, **dadurch gekennzeichnet, dass** es sich bei den Verbindungen B) um (Meth)acrylsäureester von mehrwertigen, gegebenenfalls alkoxylierten Alkoholen handelt.

12. Verwendung gemäß einem der Ansprüche 1 bis 11, **dadurch gekennzeichnet, dass** der Gewichtsanteil der Verbindungen B) 5 bis 70 Gew. %, bezogen auf die Gewichtssumme von A) +B), beträgt.

13. Verwendung gemäß einem der Ansprüche 1 bis 12, **dadurch gekennzeichnet, dass** der Kaschierklebstoff 0,0001 bis 1 mol eine Fotoinitiators oder einer Fotoinitiatorgruppe pro 100g der Gewichtsumme von Polymer A) und Verbindungen B) enthält.

14. Verwendung gemäß einem der Ansprüche 1 bis 13, **dadurch gekennzeichnet, dass** der Kaschierklebstoff weniger als 5 Gew.-Teile Wasser oder Lösemittel, bezogen auf 100 Gew.-Teile der Gewichtssumme aus A) und B) enthält.

15. Verfahren zur Verklebung einer UV-Licht oder Elektronenstrahl durchlässigen Folie mit einem weiteren Substrat zur Glanzfolien- oder Verbundfolienkaschierung, **dadurch gekennzeichnet, dass** ein Kaschierklebstoff gemäß einem der Ansprüche 1 bis 14 auf mindestens eins der zu verklebenden Substrate aufgebracht wird, die Substrate verklebt werden und danach die UV Licht oder Elektronenstrahl durchlässige Folie mit energiereichem Licht bestrahlt wird.

16. Verfahren gemäß Anspruch 15, **dadurch gekennzeichnet, dass** die UV Licht oder Elektronenstrahl-durchlässige Folie bedruckt ist.

## Claims

1. The use of a laminating adhesive comprising as binder a mixture of
A) a polymer obtainable by polymerizing free-radically polymerizable compounds, and
B) compounds containing ethylenically unsaturated, free-radically polymerizable groups (polymerizable groups for short) and having a weight-average molecular weight Mw of less than 5000 g/mol
for high gloss film lamination, i.e., for bonding transparent polymer films to paper or card, or for composite film lamination for packaging, i.e., for bonding polymer films to other polymer films, metal foils or metallized films.

2. The use according to claim 1, wherein the polymer is composed of at least 40% by weight of (meth)acrylates.

3. The use according to claim 1 or 2, wherein the polymer is crosslinkable by irradiation with high-energy light.

4. The use according to any of claims 1 to 3, wherein attached to the polymer is a photoinitiator.

5. The use according to any of claims 1 to 4, wherein the polymer has an average molar weight which is at least twice as high as the molar weight of B).

6. The use according to any of claims 1 to 5, wherein the polymer has a K value of from 10 to 90 (tetrahydrofuran, 1% strength by weight solution, 21°C) .

7. The use according to any of claims 1 to 6, wherein the polymer is a solution polymer.

8. The use according to any of claims 1 to 7, wherein the compounds B) at 21°C and 1 bar are liquid and have a viscosity of from 0.05 to 50 Pas.

9. The use according to any of claims 1 to 8, wherein the compounds B) comprise on average from 1 to 5 polymerizable groups per molecule.

10. The use according to any of claims 1 to 9, wherein the polymerizable groups of the compounds B) are acryloyl or methacryloyl groups.

11. The use according to any of claims 1 to 10, wherein the compounds B) are (meth)acrylic esters of polyhydric, unalkoxylated or alkoxylated alcohols.

12. The use according to any of claims 1 to 11, wherein the weight fraction of the compounds B) is from 5 to 70% by weight, based on the total weight of A) +B).

13. The use according to any of claims 1 to 12, comprising from 0.0001 to 1 mol of a photoinitiator or photoinitiator group per 100 g of the total weight of polymer A) and compounds B).

14. The use according to any of claims 1 to 13, comprising less than 5 parts by weight of water or solvent, based on 100 parts by weight of the total weight of A) and B).

15. A method of adhesively bonding a UV or electron beam transparent film to another substrate for high gloss film lamination or composite film lamination, which comprises applying a laminating adhesive according to any of claims 1 to 14 to at least one of the adherend substrates, bonding the substrates and then irradiating the UV or electron beam transparent film with high-energy light.

16. The method according to claim 15, wherein the UV or electron beam transparent film carries print.

## Revendications

1. Utilisation d'un adhésif de contrecollage, contenant comme liant un mélange
A) d'un polymère qui peut être obtenu par polymérisation de composés polymérisables par voie radicalaire, et
B) de composés comportant des groupes éthyléniquement insaturés, polymérisables par voie radicalaire (en abrégé groupes polymérisables) et ayant un poids moléculaire moyen pondéral M_{w} inférieur à 5000 g/mole,
pour le contrecollage de feuilles brillantes, c'est-à-dire pour le collage de feuilles de polymère transparentes avec du papier ou du carton, ou pour le contrecollage de feuilles composites pour des emballages, c'est-à-dire pour le collage de feuilles de polymère avec d'autres feuilles de polymère, des feuilles métalliques ou des feuilles métallisées.

2. Utilisation suivant la revendication 1, **caractérisée en ce que** le polymère est constitué pour au moins 40 % en poids de (méth)acrylates.

3. Utilisation suivant la revendication 1 ou 2, **caractérisée en ce que** le polymère peut être réticulé par irradiation avec de la lumière riche en énergie.

4. Utilisation suivant l'une des revendications 1 à 3, **caractérisée en ce qu'**un photoamorceur est fixé sur le polymère.

5. Utilisation suivant l'une des revendications 1 à 4, **caractérisée en ce que** le polymère présente un poids moléculaire moyen qui est au moins deux fois aussi élevé que le poids moléculaire de B).

6. Utilisation suivant l'une des revendications 1 à 5, **caractérisée en ce que** le polymère a une valeur de K de 10 à 90 (tétrahydrofuranne, solution à 1 % en poids, 21°C).

7. Utilisation suivant l'une des revendications 1 à 6, **caractérisée en ce que**, pour ce qui concerne le polymère, il s'agit d'un produit de polymérisation en solution.

8. Utilisation suivant l'une des revendications 1 à 7, **caractérisée en ce que** les composés B) sont liquides à 21°C, 1 bar, et présentent une viscosité de 0,05 à 50 Pas.

9. Utilisation suivant l'une des revendications 1 à 8, **caractérisée en ce que** les composés B) contiennent en moyenne 1 à 5 groupes polymérisables par molécule.

10. Utilisation suivant l'une des revendications 1 à 9, **caractérisée en ce que**, pour ce qui concerne les groupes polymérisables des composés B), il s'agit de groupes acryliques ou méthacryliques.

11. Utilisation suivant l'une des revendications 1 à 10, **caractérisée en ce que**, pour ce qui concerne les composés B), il s'agit d'esters (méth) acryliques d'alcools plurifonctionnels, éventuellement alcoxylés.

12. Utilisation suivant l'une des revendications 1 à 11, **caractérisée en ce que** la fraction pondérale des composés B) est de 5 à 70 % en poids, par rapport à la somme des poids de A) + B).

13. Utilisation suivant l'une des revendications 1 à 12, **caractérisée en ce que** l'adhésif de contrecollage contient 0,0001 à 1 mole d'un photoamorceur ou d'un groupe photoamorceur par 100 g de la somme pondérale du polymère A) et des composés B) .

14. Utilisation suivant l'une des revendications 1 à 13, **caractérisée en ce que** l'adhésif de contrecollage contient moins de 5 parties en poids d'eau ou de solvant, par rapport à 100 parties en poids de la somme pondérale de A) et de B).

15. Procédé de collage d'une feuille transparente à la lumière U.V. ou à un rayon électronique avec un autre substrat pour réaliser un contrecollage de feuilles brillantes ou de feuilles composites, **caractérisé en ce qu'**un adhésif de contrecollage conforme à une des revendications 1 à 14 est appliqué sur au moins un des substrats à coller, **en ce qu'**on colle les substrats et **en ce qu'**ensuite on irradie la feuille transparente à la lumière U.V. ou à un rayon électronique par une lumière riche en énergie.

16. Procédé suivant la revendication 15, **caractérisé en ce que** la feuille transparente à la lumière U.V. ou à un rayon électronique est imprimée.
